# EUROPEAN PATENT SPECIFICATION

(11) **EP 1 719 381 B1**
(45) Date of publication and mention of the grant of the patent: **18.12.2013**
(21) Application number: 05710040.6
(22) Date of filing: 03.02.2005
(51) Int. Cl.: H04W 36/00

(54) **SYSTEM AND METHOD FOR NETWORK HANDOVER**
SYSTEM UND VERFAHREN ZUR NETZWERKWEITERREICHUNG
SYSTEME ET PROCEDE DE TRANSFERT DE RESEAU

(30) Priority: 04.02.2004 GB 0402498
(43) Date of publication of application: 08.11.2006
(73) Proprietor: NEC Corporation, Minato-ku Tokyo 108-8001 (JP)
(72) Inventor: FALAKI, Hamid, Tokyo 108-8001 (JP); MANIMOHAN, Veluppillai, Tokyo 108-8001 (JP)
(74) Representative: Glawe, Delfs, Moll
(86) International application number: PCT/JP2005/001988
(87) International publication number: WO 2005/076656

(56) References cited:
- WO-A-02/45453
- WO-A-03/081939
- 3GPP: "Technical Specification Group Services and System Aspect Service aspects; Handover Requirements between UTRAN and GERAN or other Radio Systems (Release 6)s;" 3GPP TS 22.129 V6.1.0, [Online] January 2004 (2004-01), pages 1-20, XP002327576 Retrieved from the Internet: URL:http://www.3gpp.org/ftp/Specs/archive/ 22_series/22.129/22-129-610.zip> [retrieved on 2005-05-09]

## Description

### Technical Field

The present invention relates to a system and method for network handover to be adopted, in particular, in relation to a mobile radio communications device required to handover from the first radio access technology to a second radio access technology.

### Background Art

In order to realise the full advantages available with multimode radio communication devices, such as multimode cellular telephones, it is recognised that such devices may be requested to change from operation with the radio access technology of one network, to operation with a different radio access technology of a second network. For example, with the increasing availability and use of third generation networks, it is likely that such networks will be overlaid with earlier second-generation networks. Users of such networks will be divided between both depending on, in particular, user priority, the service requested, the coverage and other operator strategies so as to effectively manage network resources.

During a call, a user's terminal may therefore be requested to hand over from, for example, a Universal Mobile Telephone Services (UMTS) network cell to a Global Systems for Mobile communications (GSM) network cell. In order to limit the impact on the terminal and that might be discernable to the user of that terminal, any such handover should happen as quickly and smoothly as possible and with minimum interruption to the call currently in place. A variety of data is required in order to achieve handover with minimum disruption and one particularly important piece of information required concerning the cell to which the terminal is to be handed over to comprises the timing advance information.

Such information is required so that appropriate synchronisation to the new cell can be achieved so that the communication signal sent to that cell can be sent at an appropriate time so as to reach the target Basestation System (BSS) at the appropriate time slot.

As currently known, if, for example, the terminal has measured the observed time difference to the GSM cell while operating on the UMTS cell, and the network has also signalled the real time difference between for example a Node B and the BSS to the terminal, the terminal can then calculate the new timing advance value. However, if such arrangement does not prove possible, the BSS then has to calculate the time and advance value by requesting the terminal to transmit access bursts.

Such arrangements are however disadvantageously limited due to the additional signalling created and the delays in handover that can arise.

Methods and systems for handover from a first radio access technology to a second radio access technology are disclosed e.g. by WO 02/45453 and WO 03/081939.

### Disclosure of Invention

The present invention seeks to provide for a network handover system and method having advantages over known such methods and systems.

According to the present invention as defined in claim 1, there is provided a method of handover from a first radio access technology to a second radio access technology for a mobile radio communications device within a mobile radio communications network, and including determining a timing advance value associated with the second radio access technology, the method employing positional data of the device within the network for determining the said timing advance value.

Through the use of the positional data, which can be obtained in accordance with any appropriate position measuring arrangement, such as GPS-based or otherwise, the timing advance value can be calculated without requirement for the excess signalling that arises at the time of handover in accordance with known arrangements. A far faster process than is currently available can therefore be provided.

The advantageous shorter interruptions that arise due to the faster handover and reduction in signalling advantageously leads to improved resource utilisation and a reduction in the perceived inconvenience and interruption for the user.

The present invention can advantageously make the timing advance information available within the handover command which assists in overcoming the need for access burst transmissions and subsequent signalling of the timing advance information.

The location of the BSS associated with the second radio access technology is also determined and employed in calculating the timing advance value.

Advantageously, the aforementioned positional data is determined prior to generation of the handover command.

The timing advance value is advantageously determined within the network and transmitted to the terminal as required.

In particular, the Serving Radio Network Controller (SRNC) is arranged to receive the positional information which is then advantageously passed via the Core Network (CN) to the BSS. The timing advance value can advantageously be signalled to the device within the handover command.

Of course, as an alternative, the timing advance can be calculated within the device.

According to another aspect of the present invention as defined in claim 9, there is provided a mobile communications system arranged for operation with a first radio access technology and a second radio access technology and including means for initiating the handover of a mobile radio communications device from the first radio access technology to the second radio access technology, wherein the means for initiating the handover including means for determining a timing advance value associated with the second radio access technology and wherein such means is arranged to employ positional data of the terminal within the network for determining the said timing advance value.

The system can be arranged to operate in accordance with the advantageous further features as discussed above.

### Brief Description of the Drawing

Fig 1 is a diagrammatic representation of a currently specified handover procedure from a UMTS to the GSM cell,
Fig 2 is a representation of the handover procedure according to an embodiment of the present invention,
Fig 3 is a schematic flow diagram illustrating an embodiment of the present invention, and
Fig 4 is block-timing diagram illustrating advantages arising in accordance with the present invention.

### Best Mode for Carrying Out the Invention

As will therefore be appreciated, the present concept provides for the advantageous use of positional information of the terminal so as to provide timing advance information to the terminal in a manner which leads to a faster handover procedure exhibiting a reduced signalling overhead.

In order to illustrate the present invention further, there now follows a discussion of the currently known handover procedure from a UMTS cell to a GSM cell and as specified in the current 3rd Generation Partnership Project (3GPP).

Upon the SRNC deciding that handover from the UMTS cell to a GSM cell is required, it sends a RELOCATION REQUIRED message to the CN which serves to initiate the procedure for handover to the GSM cell. During the handover process, the link to the Universal Mobile Telephone Services Terrestrial Radio Access Network (UTRAN) is dropped and a new link is set-up to the BSS associated with the GSM cell.

A HANDOVER FROM UTRAN command is then sent to the terminal and includes information such as the frequency, channel description, transmit power level and timeslot etc that assists the terminal in setting up the new link to the BSS associated with the GSM cell. It should be noted that a HANDOVER ACCESS message can be optionally requested by the network. The aforementioned arrangement allows the BSS to calculate the timing advance value which can then be signalled by the BSS to the terminal as part of the PHYISCAL INFORMATION message.

As will be appreciated, the timing advance value is a key physical layer parameter which enables the terminal to commence its normal burst transmission at the appropriate time so as to reach the BSS associated with the GSM cell within the specified timeslot.

The known specification also suggests that the timing advance value can be calculated by the terminal itself if it can be arranged to measure the observed time difference to the GSM cell while connected to the UMTS cell and if the network has signalled the real time difference between the Node B and the BSS.

If the terminal is not able to measure the aforesaid observed time difference, or the network is not in a position to signal the real time difference between the Node B and the BSS, then the timing advance cannot be calculated at the terminal but rather has to be signalled to the terminal by the network as discussed above.

With the arrangement discussed above, the handover access burst allows the network to estimate the timing advance and deliver an appropriate value for the timing advance to the terminal. It should be noted that the access burst may have to be transmitted several times before the network returns the timing advance information.

However, in accordance with the present invention, it is identified that, if the network can estimate the timing advance prior to the handover command, then the additional signalling mentioned above, and the associated delay, can advantageously be avoided.

According to the present invention, it is proposed that the network employ determination of the terminal position so as to derive the timing advance value.

The use of positional data is considered advantageous since the typical positioning accuracy required for location services with mobile terminals effectively operates within sub-100m accuracy. This level of accuracy exceeds the required timing advance accuracy. On this basis, no additional powerful processing is required to calculate the timing advance from the position estimation since an appropriate level of accuracy is already inherent in the data provided.

As a further advantage, within UMTS there is an optional provision to support position reporting by the terminal. Also, in view of commercial considerations relating to the provision of location based value-added services and regulatory requirements for emergency services, the ability for location determination and position reporting is increasingly available and can readily be supported by a dual-mode terminal. The present invention can therefore readily be incorporated to currently available systems.

Thus, there is little, if any, overhead in requ iring the network to obtain terminal position data, or to request such data prior to handover. Knowledge of the terminal position and the location of the Node B, and the new BSS associated with the radio access technology to which the terminal is to handover is then advantageously employed to calculate the timing advance value which can itself then be signalled to the terminal as part of the HANDOVER FROM UTRAN command.

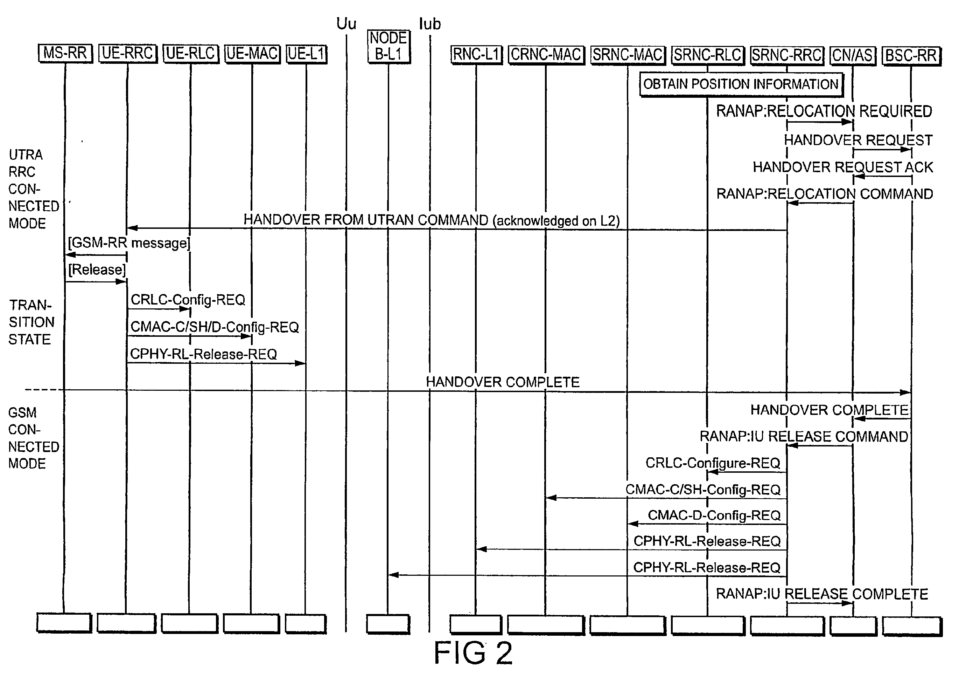

An example of an appropriate procedure embodying the present invention is illustrated by way of Fig 2 and which relates to a handover from UTRAN to GSM by means of positional information.

As will be appreciated from Fig 2, the SRNC obtains the position information prior to requesting handover to the GSM cell. This information is then passed via the CN to the new BSS and this new BSS is then arranged to signal the timing advance value to the terminal via the HANDOVER FROM UTRAN command.

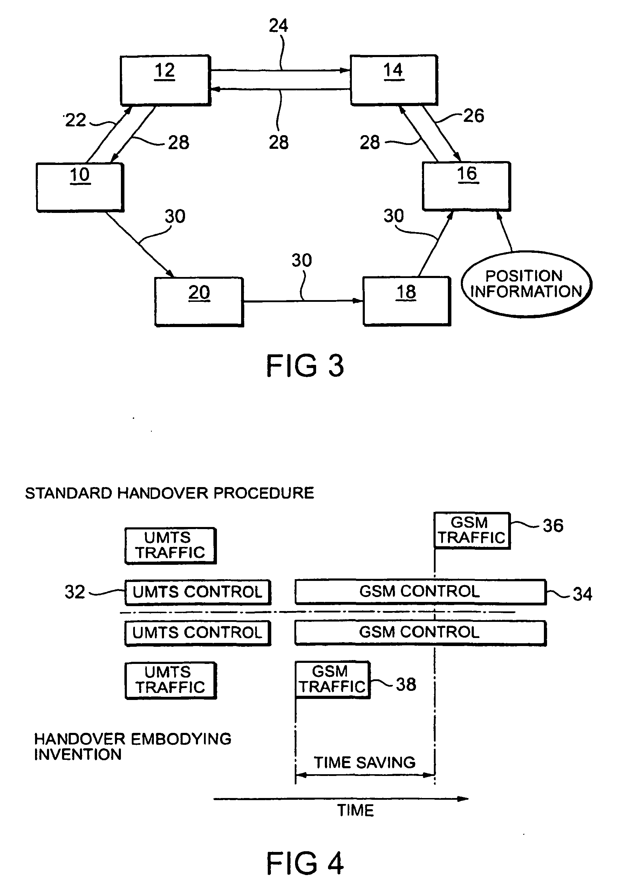

The information flow between the various entities discussed above is illustrated further with reference to Fig 3.

The system illustrated in Fig 3 comprises a dual mode terminal 10, Node B 12 associated with a radio network controller 14 and a representation of the core network 16.

Also illustrated are a base station controller 18 and base transceiver 20 forming, in combination, the new base station system.

The procedure commences at the terminal 10 with the delivery, by way of arrows 22, 24 and 26 of positional information relating to the terminal 10, Node B 12 and radio network controller 14 respectively, to the core network 16.

On the basis of this positional information, the timing advance signal is calculated at the core network 16 and then returned by way of arrows 28 to the terminal 10 by way of the radio network controller 14 and Node B 12.

The receipt of the handover command signal, including the timing advance value, at the terminal 10 allows for the generation of a signal 30 from the terminal 10 confirming that the handover is complete and also within the appropriate timeslot to the new base station system associated with the GSM network.

Turning now to Fig 4, there is provided an illustrated although not to scale, of the potential time savings achievable in accordance with the present invention.

The upper half of the diagram illustrates the handover procedure from UMTS to GSM in accordance with current standard procedure and which illustrates UMTS control signalling 32, and GSM control signalling 34, as required so as to complete the handover proced ure and commence transmission of the GSM traffic 36.

By comparison, the lower part of the diagram illustrates the handover from UMTS to GSM in accordance with an embodiment of the present invention and which illustrates how the completed handover and transmission of GSM traffic 38 can be achieved without requiring the same level of GSM control signalling as arising in the prior-art.

As will be appreciated, the present invention exhibits a variety of advantages. In particular, through use of the invention, the use of multiple excess bursts, and the physical information message, can be avoided so as to lead to an advantageous reduction in the signal required for handover.

The faster handover from UTRAN to GSM can therefore be achieved so as to lead to less inconvenience and potential disruption for the user.

Current 3GPP specifications provide for the capability to support the present invention without significant changes in view of the implementation of position determination inherent in such specification.

Further, the invention advantageously employs information that is currently available within the network so as to provide the information required by the terminal to achieve the accurate and speedy handover.

Also, relatively simple processing can be employed to process the position information in order to provide the timing advance early to the terminal.

As noted previously, the invention can also be readily arranged so that the timing advance is calculated within the handset, rather than within the network and with appropriate employment of a Radio Resource LCS Protocol (RRLP) signalling information.

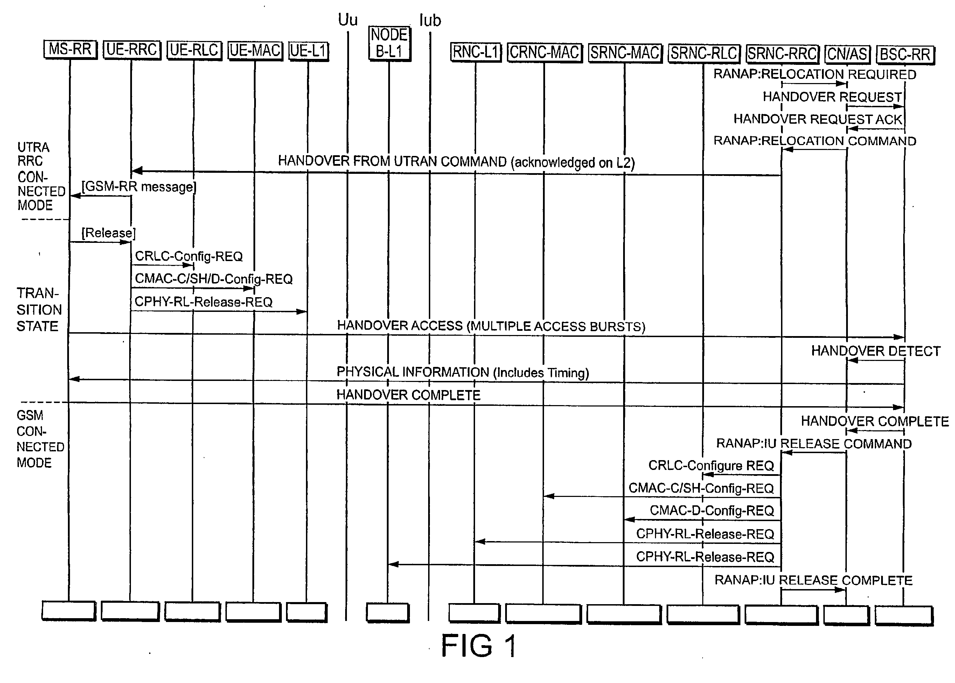

Finally, below is the listing of parts of abbreviations and their meanings appearing in Figs. 1 and 2:
- AS:: Access Stratum
- BSC:: Base Station Controller
- CN:: Core Network
- CRNC:: Controlling RNC
- DRNC:: target or Drift RNC
- DSCH:: Downlink Shared Channel
- GSM:: Global System for Mobile Communications
- lu:: Interface between Radio Network Controller and Core Network(s)
- lub:: Interface between Radio Network Controller and Base Stations (BSs)
- MAC:: Medium Access Control
- MS:: Mobile Station
- RAN:: Radio Access Network
- RANAP:: Radio Access Network Application Part
- RLC:: Radio Link Control
- RNC:: Radio Network Controller
- RRC:: Radio Resource Control
- SRNC:: Serving or Source Radio Network Controller
- UE:: User Equipment
- UTRAN:: Universal Mobile Telecommunications (UMTS) Terrestrial Radio Access Network
- Uu:: Interface between User Equipment and Base Station

## Claims

1. A method of handover from a first radio access technology to a second radio access technology for a mobile radio communications device (10) within a mobile radio communications network, and including determining a timing advance value associated with the second radio access technology, the method being **characterized in that** said timing advance value is determined by employing positional data of the mobile communication device (10) and location information of a base station system (18, 20) associated with the second radio access technology within the network, said first radio access technology relates to a UMTS system, and said second radio access technology relates to a GSM access technology.

2. A method as claimed in Claim 1, wherein the positional data of the device (10) is determined prior to handover.

3. A method as claimed in Claim 1, or 2, wherein the timing advance value is determined within the network.

4. A method as claimed in Claim 3, wherein the positional data is provided within a serving radio network controller (14) of the network.

5. A method as claimed in Claim 4, wherein the positional data is delivered by way of a core network (16) arrangement to the base station system.

6. A method as claimed in Claim 4 or 5, wherein the timing advance value is signalled to the device (10) from the base station system.

7. A method as claimed in Claim 6, wherein the timing advance value is included within the handover command as received by the device (10).

8. A method as claimed in Claim 1 or 2, wherein the timing advance value is determined within the device (10).

9. A mobile communications system arranged for operation with a first radio access technology and a second radio access technology and including means for initiating the handover of a mobile radio communications device (10) from the first radio access technology to the second radio access technology, the mobile communication system being **characterized in that** the means for initiating the handover comprises means for determining a timing advance value associated with the second radio access technology by employing positional data of the mobile radio communication device (10) and location information of a base station system (18, 20) associated with the second radio access technology within the network, said first radio access technology relates to a UMTS system, and said second radio access technology relates to a GSM access technology.

10. A system as claimed in Claim 9, and arranged such that the positional data of the device (10) is determined prior handover.

11. A system as claimed in Claim 9 or 10, and arranged such that the timing advance value is determined within the network.

12. A system as claimed in Claim 11, and arranged such that the positional data is provided within a serving radio network controller (14).

13. A system as claimed in Claim 12, and arranged such that the positional data is delivered by way of a core network arrangement (16) to the base station system.

14. A system as claimed in Claim 11 or 12, and arranged for signalling the timing advance value to the device (10) from the base station system.

15. A system as claimed in Claim 14, wherein the timing advance value is included within the handover command as received by the device (10).

16. A system as claimed in Claim 9 or 11, and arranged such that the timing advance value is determined within the device (10).

## Patentansprüche

1. Verfahren zur Übergabe von einer ersten Funkzugangstechnologie zu einer zweiten Funkzugangstechnologie für eine Mobilfunkkommunikationsvorrichtung (10) in einem Mobilfunkkommunikationsnetzwerk, und das ein Bestimmen eines Zeitversatzwertes, der mit der zweiten Funkzugangstechnologie assoziiert ist, beinhaltet, wobei das Verfahren **dadurch gekennzeichnet ist, dass** der Zeitversatzwert unter Verwendung von Positionsdaten der Mobilkommunikationsvorrichtung (10) und von Standortinformationen eines Basisstationssystem (18, 20), das mit der zweiten Funkzugangstechnologie in dem Netzwerk assoziiert ist, bestimmt wird, die erste Funkzugangstechnologie ein UMTS-System betrifft, und die zweite Funkzugangstechnologie eine GSM-Zugangstechnologie betrifft.

2. Verfahren wie in Anspruch 1 beansprucht, wobei die Positionsdaten der Vorrichtung (10) vor einer Übergabe bestimmt werden.

3. Verfahren wie in Anspruch 1 oder 2 beansprucht, wobei der Zeitversatzwert in dem Netzwerk bestimmt wird.

4. Verfahren wie in Anspruch 3 beansprucht, wobei die Positionsdaten in einer bedienenden Funknetzwerksteuerung (14) des Netzwerks zur Verfügung gestellt werden.

5. Verfahren wie in Anspruch 4 beansprucht, wobei die Positionsdaten mittels einer Kernnetzwerkanordnung (16) an das Basisstationssystem geliefert werden.

6. Verfahren wie in Anspruch 4 oder 5 beansprucht, wobei der Zeitversatzwert von dem Basisstationssystem an die Vorrichtung (10) signalisiert wird.

7. Verfahren wie in Anspruch 6 beansprucht, wobei der Zeitversatzwert im Übergabebefehl, wie er von der Vorrichtung (10) empfangen wird, beinhaltet ist.

8. Verfahren wie in Anspruch 1 oder 2 beansprucht, wobei der Zeitversatzwert in der Vorrichtung (10) bestimmt wird.

9. Mobilkommunikationssystem, das zum Betrieb mit einer ersten Funkzugangstechnologie und einer zweiten Funkzugangstechnologie eingerichtet ist und Mittel zur Einleitung der Übergabe einer Mobilfunkkommunikationsvorrichtung (10) von der ersten Funkzugangstechnologie zu der zweiten Funkzugangstechnologie beinhaltet, wobei das Mobilkommunikationssystem **dadurch gekennzeichnet ist, dass** das Mittel zur Einleitung der Übergabe Mittel zur Bestimmung eines Zeitversatzwertes, der mit der zweiten Funkzugangstechnologie assoziiert ist, unter Verwendung von Positionsdaten der Mobilfunkkommunikationsvorrichtung (10) und von Standortinformationen eines Basisstationssystems (18, 20), das zur zweiten Funkzugangstechnologie in dem Netzwerk gehört, umfasst, die erste Funkzugangstechnologie ein UMTS-System betrifft, und die zweite Funkzugangstechnologie eine GSM-Zugangstechnologie betrifft.

10. System wie in Anspruch 9 beansprucht, und derart eingerichtet, dass die Positionsdaten der Vorrichtung (10) vor einer Übergabe bestimmt werden.

11. System wie in Anspruch 9 oder 10 beansprucht, und derart eingerichtet, dass der Zeitversatzwert in dem Netzwerk bestimmt wird.

12. System wie in Anspruch 11 beansprucht, und derart eingerichtet, dass die Positionsdaten in einer bedienenden Funknetzwerksteuerung (14) zur Verfügung gestellt werden.

13. System wie in Anspruch 12 beansprucht, und derart eingerichtet, dass die Positionsdaten mittels einer Kernnetzwerkanordnung (16) an das Basisstationssystem geliefert werden.

14. System wie in Anspruch 11 oder 12 beansprucht, und eingerichtet, um den Zeitversatzwert von dem Basisstationssystem an die Vorrichtung (10) zu signalisieren.

15. System wie in Anspruch 14 beansprucht, wobei der Zeitversatzwert im Übergabebefehl, wie er von der Vorrichtung (10) empfangen wird, beinhaltet ist.

16. System wie in Anspruch 9 oder 11 beansprucht, und derart eingerichtet, dass der Zeitversatzwert in der Vorrichtung (10) bestimmt wird.

## Revendications

1. Procédé de transfert intercellulaire d'une première technologie d'accès radio à une seconde technologie d'accès radio pour un dispositif de radiocommunications mobiles (10) au sein d'un réseau de radiocommunications mobiles, et comprenant la détermination d'une valeur d'avance temporelle associée à la seconde technologie d'accès radio, le procédé étant **caractérisé en ce que** ladite valeur d'avance temporelle est déterminée en employant des données de position du dispositif de communication mobile (10) et des informations de localisation d'un système de station de base (18, 20) associé à la seconde technologie d'accès radio au sein du réseau, ladite première technologie d'accès radio est liée à un système UMTS, et ladite seconde technologie d'accès radio est liée à une technologie d'accès GSM.

2. Procédé selon la revendication 1, dans lequel les données de position du dispositif (10) sont déterminées avant le transfert intercellulaire.

3. Procédé selon la revendication 1 ou 2, dans lequel la valeur d'avance temporelle est déterminée au sein du réseau.

4. Procédé selon la revendication 3, dans lequel les données de position sont fournies au sein d'un contrôleur de réseau radio de service (14) du réseau.

5. Procédé selon la revendication 4, dans lequel les données de position sont transmises au moyen d'un agencement de réseau coeur(16) au système de station de base.

6. Procédé selon la revendication 4 ou 5, dans lequel la valeur d'avance temporelle est signalée au dispositif (10) depuis le système de station de base.

7. Procédé selon la revendication 6, dans lequel la valeur d'avance temporelle est incluse au sein de la commande de transfert intercellulaire telle que reçue par le dispositif (10).

8. Procédé selon la revendication 1 ou 2, dans lequel la valeur d'avance temporelle est déterminée au sein du dispositif (10).

9. Système de communication mobile agencé pour fonctionner avec une première technologie d'accès radio et une seconde technologie d'accès radio et comprenant un moyen permettant de lancer le transfert intercellulaire d'un dispositif de radiocommunications mobiles (10) de la première technologie d'accès radio à la seconde technologie d'accès radio, le système de communication mobile étant **caractérisé en ce que** le moyen permettant de lancer le transfert intercellulaire comprend un moyen permettant de déterminer une valeur d'avance temporelle associée à la seconde technologie d'accès radio en employant des données de position du dispositif de radiocommunication mobile (10) et des informations de localisation d'un système de station de base (18, 20) associé à la seconde technologie d'accès radio au sein du réseau, ladite première technologie d'accès radio est liée à un système UMTS, et ladite seconde technologie d'accès radio est liée à une technologie d'accès GSM.

10. Système selon la revendication 9, et agencé de sorte que les données de position du dispositif (10) sont déterminées avant le transfert intercellulaire.

11. Système selon la revendication 9 ou 10, et agencé de sorte que la valeur d'avance temporelle est déterminée au sein du réseau.

12. Système selon la revendication 11, et agencé de sorte que les données de position sont fournies au sein d'un contrôleur de réseau radio de service (14).

13. Système selon la revendication 12, et agencé de sorte que les données de position sont transmises au moyen d'un agencement de réseau coeur(16) au système de station de base.

14. Système selon la revendication 11 ou 12, et agencé pour signaler la valeur d'avance temporelle au dispositif (10) depuis le système de station de base.

15. Système selon la revendication 14, dans lequel la valeur d'avance temporelle est incluse au sein de la commande de transfert intercellulaire telle que reçue par le dispositif (10).

16. Système selon la revendication 9 ou 11, et agencé de sorte que la valeur d'avance temporelle est déterminée au sein du dispositif (10).
